# EUROPEAN PATENT SPECIFICATION

(11) **EP 2 098 738 B1**
(45) Date of publication and mention of the grant of the patent: **15.02.2012**
(21) Application number: 07860224.0
(22) Date of filing: 26.12.2007
(51) Int. Cl.: F16C 33/54

(54) **THRUST ROLLER BEARING**
DRUCKROLLENLAGER
BUTEE A ROULEAUX

(30) Priority: 27.12.2006 JP 2006353309
(43) Date of publication of application: 09.09.2009
(73) Proprietor: JTEKT Corporation, Osaka-shi Osaka 542-8502 (JP)
(72) Inventor: NAKAOKA, Kenichi, Osaka-shi Osaka 542-8502 (JP)
(74) Representative: Schaeberle, Steffen
(86) International application number: PCT/JP2007/074995
(87) International publication number: WO 2008/078786

(56) References cited:
- EP-A1- 0 374 111
- DE-A1-102004 014 279
- DE-A1-102005 009 772
- DE-A1-102005 058 152
- JP-A- 2004 211 824
- JP-A- 2006 242 230
- JP-A- 2006 329 219

## Description

### Technical Field

The present invention relates to a thrust roller bearing which is used in an automatic transmission, a compressor of an air conditioner, etc. in an automobile, for example.

### Background Art

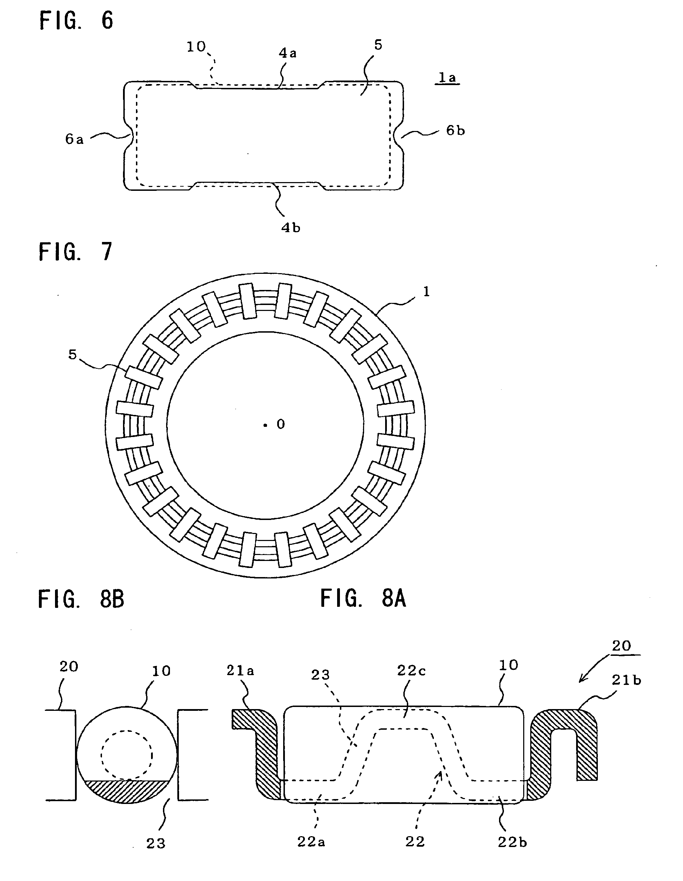

As shown in Fig. 7, for example, a thrust roller bearing has a cage 1 which includes an annular plate formed by stamping a metal plate or by molding synthetic resin, and provided with pockets 5 for holding rollers radially from a center O of the annular plate, at a determined interval in a circumferential direction. The rollers are contained in the pockets 5 and retained so as to freely roll, by a plurality of retaining hooks which are provided on end faces of the pockets 5 in the circumferential direction.

Figs. 8A and 8B are views for explaining a conventional cage and a roller contained in a pocket of the cage.
A cage 20 includes an outer diameter side race guide part 21a which is provided at an outer diameter side in a radial direction, and an inner diameter side race guide part 21b which is provided at an inner diameter side in the radial direction. Moreover, an outer diameter side protruding part 22a and an inner diameter side protruding part 22b are protruded in the same direction between the two race guide parts 21a, 21b, and an intermediate protruding part 22c is protruded in an opposite direction between the two protruding parts 22a, 22b up to a plane substantially at the same level as upper faces of the outer diameter side race guide part 21a and the inner diameter side race guide part 21b.

A pocket 23 in a rectangular shape which is longer in the radial direction is provided from the outer diameter side protruding part 22a to the inner diameter side protruding part 22b. A length of the pocket 23 in the radial direction is longer than a length of a roller 10 in its axial direction. The roller 10 is contained in a substantially center part of the pocket 23, and retained so as to freely roll, by means of retaining hooks (not shown) which are provided on the outer diameter side protruding part 22a, the inner diameter side protruding part 22b, and the intermediate protruding part 22c so as to project into the pocket 23.

The thrust roller bearing which is constructed as described above is interposed between a housing and a rotation shaft, for example. When the rotation shaft is rotated, the rollers 10 are urged outwardly in the radial direction by a centrifugal force of the rotation, and an axial end face of each of the rollers 10 is brought into sliding contact with an end face of the pocket 23 of the cage 20 at the outer diameter side, in a wide range at an outer peripheral side of the axial end face of the roller 10 where peripheral velocity is large, as shown by diagonal lines in Fig. 8B.

Accordingly, frictional resistance is exerted on the roller 10 due to the sliding contact. Because the frictional resistance is increased with an increase of rotation speed of the rotation shaft, not only rotation torque is increased, but also generation of heat occurs, which is unfavorable. In case where the rotation shaft is eccentrically rotated, substantially the same problem occurs, because both the axial end faces of the roller 10 are brought into sliding contact with the end faces of the pocket 23 at the outer diameter side and at the inner diameter side.

In order to solve such problems, there has been proposed a cage for a thrust roller bearing in which convex ridge parts extending in a direction of thickness of the cage are provided on the outer diameter side end face and the inner diameter side end face of the pocket in their respective center parts in a circumferential direction so that these convex ridge parts may pivotally support the center parts of the axial end faces of the roller, when the roller is urged outwardly in the radial direction, by a centrifugal force, for example (Reference should be made to Japanese Patent Publication No. JP-A-2006-144821, for example).
JP 2004 211824 A discloses a cage for a thrust roller bearing, which is formed by joining two annular plates.

### Disclosure of the Invention

### Problems that the Invention is to Solve

According to the cage for the thrust roller bearing in Patent Document 1, when the roller is urged outwardly in the radial direction, by a centrifugal force, for example, the convex ridge part which is provided on the outer diameter side end face of the pocket pivotally supports the center part of the end face of the roller. In this manner, frictional resistance of the roller is reduced, and decrease of torque can be achieved. However, because the center part of the end face of the roller where peripheral velocity is nearly zero is brought into contact with the convex ridge part, there has been such anxiety that an oil film is hardly formed and becomes thin, resulting in discontinuity of the oil film.

This invention has been made in order to solve the above described problems, and it is an object of the invention to provide a cage for a thrust roller bearing in which generation of heat and increase of torque scarcely occurs, even though an end face of a roller is brought into sliding contact with an end face of a pocket, and a sufficient oil film can be formed on a sliding contact part.

### Means for Solving the Problems

This object is solved by the features of claim 1.

### Advantage of the Invention

According to the invention, the roller is contained in the pocket in such a manner that the outer peripheral side of the end face of the roller from the center thereof is opposed to the projection which is provided on the outer diameter side end face or both the outer diameter side end face and the inner diameter side end face of the pocket of the cage. Therefore, when the roller is urged or moved outwardly in a radial direction with rotation of the rotation shaft, the end face of the roller is brought into sliding contact with the projection having a small contact area, and hence, frictional resistance of the sliding contact is small, and an increase of torque can be restrained. Moreover, because a position of the end face of the roller where peripheral velocity is large to some extent is brought into sliding contact with the projection, an oil film is sufficiently formed, whereby direct contact between the roller and the cage is restrained, and the thrust roller bearing of enhanced reliability can be obtained.

### Brief Description of the Drawings

Fig. 1 is a sectional view of a cage of a needle roller thrust bearing according to an example
Fig. 2 is a perspective view showing a part of the cage and a roller in Fig. 1.
Fig. 3 is a plan view showing a pocket in the cage in Fig. 1.
Fig. 4 is a view for explaining function of the example
Fig. 5 is a sectional view of a cage of a needle roller thrust bearing according to an embodiment of the invention.
Fig. 6 is a plan view showing a pocket in the cage in Fig. 5.
Fig. 7 is a plan view showing an example of a cage of a needle roller thrust bearing.
Figs. 8A and 8B are sectional views of a conventional needle roller thrust bearing.

### Best Mode for Carrying Out the Invention

### Example

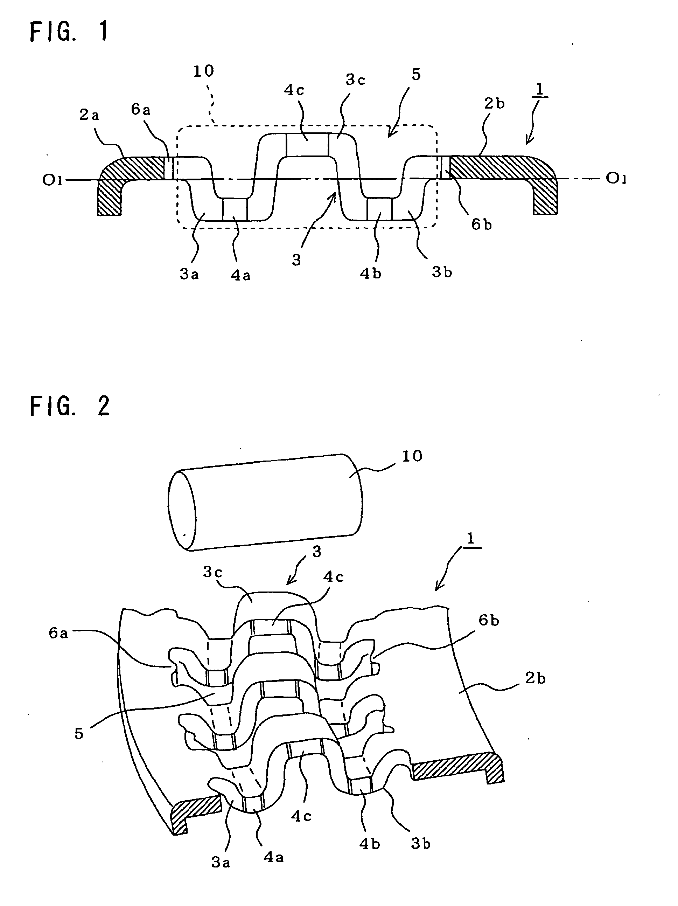

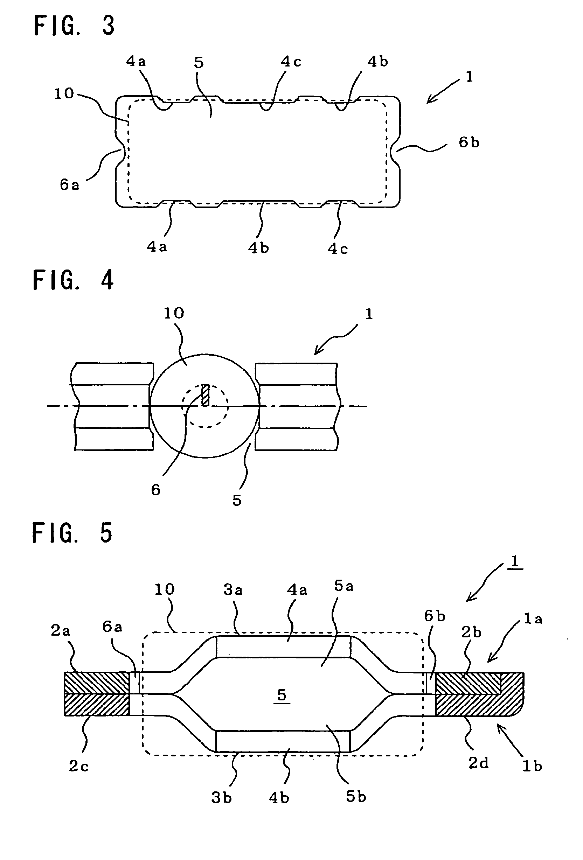

Fig. 1 is a sectional view of a cage of a needle roller thrust bearing as the thrust roller bearing according to an example, Fig. 2 is an exploded perspective view of the cage and a roller in Fig. 1, and Fig. 3 is a plan view of a pocket in Fig. 1.

In the drawings, numeral 1 represents a cage in an annular shape having a waveform folded part 3 which is provided between an outer diameter side race guide part 2a at an outer diameter side and an inner diameter side race guide part 2b at an inner diameter side. This waveform folded part 3 includes an outer diameter side protruding portion 3a and an inner diameter side protruding portion 3b which are substantially equally protruded at one side, and an intermediate protruding portion 3c which is protruded at the other side, up to a position higher than upper faces of the outer diameter side race guide part 2a and the inner diameter side race guide part 2b.

Moreover, a pocket 5 having a rectangular shape which is longer in a radial direction is provided from a position near a fold starting point at the outer diameter side of the outer diameter side protruding portion 2a to a position near a fold starting point at the inner diameter side of the inner diameter side protruding portion 2b. A length of the pocket 5 in the radial direction is longer than a length of a roller 10 in its axial direction. Projections 6a, 6b are formed so as to be opposed to each other, on an outer diameter side end face and on an inner diameter side end face of this pocket 5, in a direction of its thickness, in a substantially center part thereof in a lateral direction (a circumferential direction). A distance between distal ends of the projections 6a, 6b is slightly longer than an axial length of the needle roller 10, as the roller.

Further, retaining hooks 4a, 4b, 4c are provided on respective apexes of the outer diameter side protruding portion 3a, the inner diameter side protruding portion 3b, and the intermediate protruding portion 3c so as to protrude into the pocket 5. Distances between the retaining hooks 4a, 4b 4c which are opposed to each other are formed narrower than a diameter of the roller 10. The roller 10 is forcibly fitted into the pocket 5 to be contained therein, and retained within the pocket 5 so as to freely roll, by means of the retaining hooks 4a to 4c, without dropping.

In order to contain the roller 10 in the pocket 5, an axial center of the roller 5, for example, is aligned with a line O₁-O₁ connecting lower faces of the outer diameter side race guide part 2a and the inner diameter side race guide part 2b. Specifically, the roller 10 is contained in the pocket 5 in such a manner that positions of the axial end faces of the roller 10 which are offset from their centers toward outer peripheral sides may be opposed to the projections 6a, 6b, and then, retained by the retaining hooks 4a to 4c. Although the case where the outer peripheral sides of the end faces of the roller 10 from the centers are opposed to the projections 6a, 6b is shown in the drawing, the positions at the outer peripheral sides of the end faces of the roller 10 which are separated from the centers thereof may be opposed to the projections 6a, 6b.

According to the example which is constructed as described above, when the roller 10 is urged to the outer diameter side by a centrifugal force, for example, the roller 10 rolls while the outer peripheral side from the center of the axial end face thereof is kept in sliding contact with the projection 6a which has a small contact area, as shown in Fig. 4. Therefore, not only sliding resistance is small, and an increase of rotation torque is restrained, but also the outer peripheral side from the center of the end face of the roller 10 where peripheral velocity of the rolling movement is relatively large is brought into sliding contact with the projection 6a, and hence, an oil film is sufficiently formed without discontinuity of oil. Moreover, even in case where the roller 10 moves in the radial direction within the pocket 5 due to an offset or so of the rotation shaft, the outer peripheral side of the outer diameter side end face or the inner diameter side end face of the roller 10 is brought into sliding contact with the projection 6a, or 6b, and hence, substantially the same effect as described above can be obtained.

### Embodiment

Fig. 5 is a sectional view of a cage of a thrust roller bearing according to an embodiment of the invention, and Fig. 6 is a plan view of a pocket in Fig. 5.
In this embodiment, a cage 1 is formed by integrally joining two sheets of annular plates 1a, 1b.

Between outer diameter side race guide parts 2a, 2c and inner diameter side race guide parts 2b, 2d of the two annular plates 1a, 1b, there are provided protruding portions 3a, 3b in a trapezoidal shape which are folded in an opposite direction to each other. Between both the race guide parts 2a, 2b and 2c, 2d, there are formed openings 5a, 5b in a rectangular shape which are longer in the radial direction, and the two openings 5a, 5b are combined to form a pocket 5 for containing a roller 10. Moreover, projections 6a, 6b which project into the pocket 5 are provided on both end faces in a radial direction of the opening 5a of one of the annular plates (1a, for example), in a substantially center part thereof in a lateral direction. Numerals 4a, 4b represent retaining hooks for retaining the roller 10, which are provided on apexes of the protruding portions 3a, 3b at a side opposed to the pocket 5.

In the cage 1 which is constructed as described above, the roller 10 is forcibly fitted into a substantially center part of the pocket 5, and retained by the retaining hooks 4a, 4b so as to freely roll. On this occasion, both the axial end faces of the roller 10 are opposed to the projections 6a, 6b, at outer peripheral sides from their centers. Although the case where the projections 6a, 6b are provided on both the end faces of the opening 5a of the one annular plate 1a has been described in the foregoing description, it is also possible to provide the projections 6a, 6b on both the end faces in the radial direction of the opening 5b in the other annular plate 1b.
In this embodiment too, substantially the same function and effect as in case of the described example can be obtained.

Although in the foregoing description, the case where the invention is applied to the thrust roller bearing as shown in the drawings has been described, the invention is not limited to the case, but can be also applied to thrust roller bearings having other structures. Moreover, although the case where the invention is applied to the needle roller thrust bearing has been described, the invention can be also applied to an ordinary thrust roller bearing.
Further, although the case where the projections 6a, 6b are provided on both the outer peripheral side end face and the inner peripheral side end face of the pocket 5 of the cage 1 has been described, it is also possible to provide the projection 6a only on the outer peripheral side end face.

### Terms in the drawings

Fig. 1,5
- 1:: CAGE
- 3:: WAVEFORM FOLDED PART
- 4a, 4b:: RETAINING HOOK
- 5:: POCKET
- 6a, 6b:: PROJECTION

## Claims

1. A thrust roller bearing comprising :
- a cage formed by integrally joining a first annular plate (1a) having a protruding part which is protruded at one side and a second annular plate (1b) having a protruding part which is protruded at the other side, and provided with a plurality of pockets (5) between outer race guide parts (2a) and inner race guide parts (2b) of the first annular plate and the second annular plate; and
- rollers (10) which are respectively contained in the pockets (5) so as to freely roll,
- wherein projections (6a, 6b) are provided on an outer diameter side end face and an inner diameter side end face, or on the outer diameter side end face of each of the pockets (5) in either one of the first and second annular plates, in substantially center parts thereof in a lateral direction, and each of the rollers (10) is contained in the pocket (5) **characterised in that** axial end faces of the roller (10) are opposed to the projections (6a, 6b), at an outer peripheral side from a center of the axial face of the roller.

## Patentansprüche

1. Druckrollenlager, umfassend:
- einen Käfig, der durch einstückiges Verbinden einer ersten ringförmigen Platte (1a), die ein vorstehendes Teil, das an einer Seite vorsteht, aufweist, mit einer zweiten ringförmigen Platte (1b), die ein vorstehendes Teil, das an der anderen Seite vorsteht, aufweist, gebildet wird, und mit einer Vielzahl von Aussparungen (5) zwischen äußeren Laufringführungsteilen (2a) und inneren Laufringführungsteilen (2b) der ersten ringförmigen Platte und der zweiten ringförmigen Platte versehen ist; und
- Rollen (10), die jeweils in den Aussparungen (5) enthalten sind, um frei abzurollen,
- wobei Vorsprünge (6a, 6b) auf einer außendurchmesserseitigen Endfläche und einer innendurchmesserseitigen Endfläche oder auf der außendurchmesserseitigen Endfläche jeder der Aussparungen (5) in jeder der ersten und zweiten ringförmigen Platten in im Wesentlichen mittleren Teilen davon in einer seitlichen Richtung vorgesehen sind, und jede der Rollen (10) in der Aussparung (5) enthalten ist, **dadurch gekennzeichnet, dass** axiale Endflächen der Rollen (10) den Vorsprüngen (6a, 6b) an einer Außenumfangsseite von einer Mitte der axialen Fläche der Rolle gegenüberliegen.

## Revendications

1. Butée à rouleaux comprenant :
une cage formée en reliant de manière unitaire une première plaque annulaire (1a) comportant une partie en saillie qui s'étend d'un premier côté et une seconde plaque annulaire (1b) comportant une partie en saillie qui s'étend de l'autre côté, et comportant une pluralité de poches (5) entre des parties de guidage de piste externe (2a) et des parties de guidage de piste interne (2b) de la première plaque annulaire et de la seconde plaque annulaire ; et
des rouleaux (10) qui sont contenus respectivement dans les poches (5) de manière à rouler librement,
dans laquelle des saillies (6a, 6b) sont agencées sur une face d'extrémité latérale de diamètre externe et une face d'extrémité latérale de diamètre interne, ou sur la face d'extrémité latérale de diamètre externe de chacune des poches (5) sur l'une ou l'autre des première et seconde plaques annulaires, sur des parties sensiblement centrales de celles-ci suivant une direction latérale, et chacun des rouleaux (10) est contenu dans la poche (5), **caractérisée en ce que** les faces d'extrémité axiales du rouleau (10) sont opposées aux saillies (6a, 6b), au niveau d'un côté périphérique externe à partir d'un axe de la face axiale du rouleau.
